# EUROPÄISCHE PATENTSCHRIFT

(11) **EP 3 378 700 B1**
(45) Veröffentlichungstag und Bekanntmachung des Hinweises auf die Patenterteilung: **30.10.2019**
(21) Anmeldenummer: 18155943.6
(22) Anmeldetag: 09.02.2018
(51) Int. Cl.: B60Q 1/00, F21S 45/00

(54) **LICHTMODUL FÜR EINEN KRAFTFAHRZEUGSCHEINWERFER**
LIGHT MODULE FOR A MOTOR VEHICLE HEADLAMP
MODULE D'ÉCLAIRAGE POUR PHARE DE VÉHICULE AUTOMOBILE

(30) Priorität: 23.03.2017 AT 502362017
(43) Veröffentlichungstag der Anmeldung: 26.09.2018
(73) Patentinhaber: ZKW Group GmbH, 3250 Wieselburg (AT)
(72) Erfinder: Falkensteiner, Christian, 3261 Wolfpassing (AT); Mayer, Matthias, 3240 Mank (AT)
(74) Vertreter: Patentanwaltskanzlei Matschnig & Forsthuber OG

(56) Entgegenhaltungen:
- EP-A1- 3 002 511
- EP-A1- 3 015 317
- WO-A1-2006/105969
- DE-A1-102005 015 938
- DE-A1-102007 049 473
- JP-A- 2004 227 933
- JP-A- 2007 311 076
- KR-U- 19980 016 315
- US-A1- 2013 160 246

## Beschreibung

Die Erfindung betrifft ein Lichtmodul für einen Kraftfahrzeugscheinwerfer, wobei das Lichtmodul zumindest eine Lichtquelle, zumindest eine Lichtformungseinheit, zumindest ein Antriebsmittel, durch welches das Lichtmodul verstellbar ist, und einen zur Ansteuerung und/ oder Energieversorgung des Lichtmoduls zu dem Lichtmodul hinführenden Kabelstrang umfasst, der mittels einer Steckverbindung mit dem Lichtmodul verbunden ist, wobei die Steckverbindung einen Stecker und ein Steckergegenstück aufweist, wobei das das Lichtmodul zumindest eine Fixierungseinrichtung für den Kabelstrang aufweist, um diesen Kabelstrang punktuell und/oder abschnittsweise zu fixieren, wobei die Fixierungseinrichtung zumindest ein Kupplungselement sowie zumindest ein an dem Lichtmodul angeordnetes Gegenkupplungselement umfasst, wobei das zumindest eine Kupplungselement zumindest ein Halterungsmittel für den Kabelstrang aufweist, welches dazu eingerichtet ist, den Kabelstrang an der Position, an der das zumindest eine Halterungsmittel an dem Kabelstrang angeordnet ist, bezüglich des zumindest einen Kupplungselements zu fixieren.

Über den Stecker und den Kabelstrang wird das Lichtmodul und die darin befindlichen Lichtquellen sowie das zumindest eine Antriebsmittel, vorzugsweise Schrittmotor, mit Strom versorgt.

Bei einem Lichtmodul eines Kurvenlichtscheinwerfers können beispielsweise zwei Antriebsmittel vorgesehen sein, wobei ein Antriebsmittel zum Verschwenken des Lichtmoduls bzw. der zumindest einen Lichtformungseinheit und das andere Antriebsmittel zur Leuchtweitenregelung eingesetzt wird.

Da mittlerweile vermehrt LED-Module als Lichtquellen in Kraftfahrzeugscheinwerfern, so auch bei Kurvenlichtscheinwerfern, verwendet werden und für den Betrieb der LED-Module eine höhere Anzahl an einzelnen Kabeln im Kabelstrang notwendig sind, neigt der gesamte Kabelstrang bei Minustemperaturen zu einer erhöhten Steifigkeit. Dies führt dazu, dass der am Lichtmodul angeordnete und als Antriebsmittel eingesetzte Motor mehr Kraft benötigt, um das Lichtmodul beispielsweise im Zuge einer Leuchtweitenregelung vor- bzw. rückwärts zu bewegen, wobei hierbei vermehrt Schrittverluste am Motor auftreten können.

Weiters treten bei ständigen Lichtmodulbewegungen, beispielsweise Leuchtweitenregelung, Aufweitungen der Steckkontakte der einzelnen Kabel des Kabelstranges an dem Stecker auf, was zu häufigen Wackelkontakten an dem Stecker führt, wobei auch Kabelbrüche nicht auszuschließen sind.

Bei bekannten Lösungen des Standes der Technik werden unter anderem deutliche Kabelüberlängen verwendet, wodurch die Kabelummantelung bei Verschwenkungen oder anderen Bewegungen des Lichtmoduls an den umliegenden Bauteilen aufgescheuert werden. Um solche Scheuerstellen vorzubeugen, werden die einzelnen Kabel bzw. der Kabelstrang mit einer zusätzlichen Ummantelung, beispielsweise Silikon, versehen, wobei eine Gefahr der Ausgasung besteht.

Aus JP 2007 311076 A ist ein gattungsgemäßes Lichtmodul für einen Kraftfahrzeugscheinwerfer bekannt.

Es ist daher Aufgabe der Erfindung ein verbessertes Lichtmodul bereitzustellen, um oben erwähnte Nachteile und andere Einschränkungen des Standes der Technik zu vermeiden.

Diese Aufgabe wird dadurch gelöst, dass das Gegenkupplungselement als Blechzunge ausgebildet ist und das Kupplungselement als Flachsteckerhülse ausgebildet ist, um an das als Blechzunge ausgebildete Gegenkupplungselement zu koppeln.

Unter den Begriffen "fixiert" bzw. "Fixierung" sind auch für den Fachmann minimale Bewegungen des zu fixierenden Objekts inbegriffen, sodass damit nicht ausschließlich eine explizit starre Fixierung gemeint ist. Dies trifft auch für Begriffe wie "bewegungsfest" zu, die eine analoge Definition beinhalten.

In die obige Begriffsdefinition fällt beispielsweise ein durch einen Kabelbinder umklammertes und dadurch fixiertes Kabel, welches mit genügend Kraftaufwand trotzdem bewegbar bzw. drehbar ist.

Der Kabelstrang kann ein oder mehrere Kabel umfassen.

Es können auch zwei oder mehrere Kabelstränge vorgesehen sein.

Die Lichtformungseinheit kann beispielsweise ein Reflektor, eine Linse und/oder jegliche Vorsatzoptik sein, die dazu ausgebildet ist, Licht der zumindest einen Lichtquelle in seiner Intensität, Richtung und/oder anderen Charakteristiken zu verändern bzw. zu formen.

Überdies kann als Lichtquelle beispielsweise ein Laser, eine Entladungslampe oder eine LED verwendet werden, wobei im Falle einer LED mehrere Leuchtdioden umfasst sein können.

Das Lichtmodul kann zur Erzeugung von zumindest einer Beleuchtungsfunktion und/ oder Signalisierungsfunktion eingerichtet sein, beispielsweise Kurvenlicht, Tagfahr- und/oder Abblendlicht.

Der Kabelstrang kann beispielsweise durch einen Kabelkanal, der üblicherweise zur Verlegung des Kabelstrangs in einem Kraftfahrzeugscheinwerfer zum Einsatz kommt, im Wesentlichen fixiert bzw. zumindest dermaßen in seiner Bewegung eingeschränkt sein, dass man den Anfangs- bzw. Endbereich des Kabelkanals als Halterungs- oder Fixierungspunkt bezeichnen kann - für die nachfolgende Erklärung auch Punkt B genannt. Einen weiteren Fixierungs- bzw. Halterungspunkt bildet die Steckverbindung des Steckers mit dem Steckergegenstück - für die nachfolgende Erklärung auch Punkt A genannt - welche in der Regel an dem Lichtmodul selbst angeordnet ist und sich bei einer Bewegung des Lichtmoduls gleichermaßen mitbewegt.

Zwischen diesen beiden Positionen bzw. Punkten A und B ist der Kabelstrang im Rahmen der Länge zwischen diesen Punkten in seiner Bewegung im Wesentlichen frei und uneingeschränkt, sodass sich der Kabelstrang bei einer Relativbewegung der Steckverbindung (Punkt A), die beispielsweise durch eine Bewegung des Lichtmoduls bzw. des Antriebsmittels hervorgerufen wird, in Richtung Halterungspunkt des Kabelkanals (Punkt B) verbiegen bzw. wölben kann, solang die direkte Verbindung im Sinne der kürzest möglichen Verbindungsstrecke zwischen den Fixierungspunkten A und B kürzer ist als die Länge des Kabelstrangs zwischen diesen Fixierungspunkten A und B.

Bei einer Relativbewegung der Steckverbindung (Punkt A) in die entgegengesetzte Richtung strafft sich hingegen der Kabelstrang, wobei die Bewegung durch die Länge des Kabelstrangs zwischen den beiden Halterungs- bzw. Fixierungspunkten A und B begrenzt wird.

Bei jeder Art der Bewegung von Punkt A relativ zu Punkt B bewegt sich auch der Bereich des Kabelstrangs, der unmittelbar an den Stecker anschließt, wodurch dieser, wie in der Beschreibungseinleitung erwähnt, unter anderem Aufweitungen der Steckkontakte der einzelnen Kabel des Kabelstranges an dem Stecker erfährt, was unerwünscht ist.

Zur Vermeidung einer solchen Bewegung ist der Kabelstrang an einem weiteren Punkt C zwischen den zuvor erwähnten Halterungs- bzw. Fixierungspunkten A und B fixiert, wobei dieser weitere Fixierungspunkt C bei Relativbewegungen von Punkt A und B an die Bewegung von Punkt A gekoppelt ist, d.h. dass Punkt C bewegungsfest und/oder drehfest in Bezug auf Punkt A angeordnet ist. Der in der Bewegung im Wesentlichen freie Kabelstrang beschränkt sich nun auf die Länge des Kabelstrangs zwischen den Punkten B und C, wodurch eine Zugentlastung des Kabelstrangs und vor allem der Steckverbindung (Punkt A) ermöglicht wird.

Es sei darauf hingewiesen, dass der Fixierungs- bzw. Halterungspunkt B nicht auf den Anfangs- bzw. Endbereich eines Kabelkanals beschränkt ist, sondern vielmehr der Punkt bzw. die Stelle ist, an dem der Kabelstrang entlang des Kabelstrangs - beginnend bei der Steckverbindung - zum ersten Mal eine Fixierung bzw. Halterung bezüglich einer Relativbewegung der Steckverbindung (Punkt A) erfährt.

Die Steckverbindung (Punkt A) befindet sich vorzugsweise an dem zumindest einen Antriebsmittel, das insbesondere bei einer Bewegung zur Leichtweitenregelung mit dem Tragerahmen und der Lichtformungseinheit gleichermaßen mitbewegt wird. Eine solche Bewegung ist in der Regel im Wesentlichen eine Bewegung in bzw. gegen die Lichtaustrittsrichtung der zumindest einen Lichtformungseinheit.

Es sei darauf hingewiesen, dass im Stand der Technik erwähnte Fixierungen des Kabelstrangs an einem Kraftfahrzeugscheinwerfergehäuse nicht die gewünschte Zugentlastung der Steckverbindung bzw. dem Bereich des Kabelstrangs, der unmittelbar an den Stecker anschließt, hervorrufen, da das Kraftfahrzeugscheinwerfergehäuse in der Regel gewissermaßen ein Inertialsystem bezüglich des Lichtmoduls bildet und ein Fixierungspunkt des Kabelstrangs an dem Gehäuse - im Sinne des oben beschriebenen Punktes C - die oben beschriebenen Erfordernisse bezüglich des Punktes A nicht erfüllt.

Vielmehr bildet die teilweise Fixierung des Kabelstrangs an dem Kraftfahrzeugscheinwerfergehäuse das Analogon zu oben erwähntem Kabelkanal.

Da der Kabelstrang beispielsweise in einem Kabelkanal oder an einem Kraftfahrzeugscheinwerfergehäuse abschnittsweise fixiert ist, kann sich dieser fixierte Abschnitt des Kabelstrangs bei einer Bewegung des restlichen Lichtmoduls nicht gleichermaßen mitbewegen.

Mit Vorteil kann vorgesehen sein, dass die Kupplungsverbindung zwischen dem zumindest einen Kupplungselement und dem zumindest einen Gegenkupplungselement lösbar ist.

Die Verbindung zwischen dem Kupplungselement und dem Gegenkupplungselement kann ausschließlich eine mechanische Verbindung sein.

In einer praxisgerechten Ausführungsform der Erfindung kann das zumindest eine Halterungsmittel als Kabelbinder ausgebildet sein.

Da die Kabelstrangummantelung in der Regel gegenüber Zug- und/oder Druckspannung nicht übermäßig empfindlich ist, ist die Verwendung eines Kabelbinders optimal, um einerseits den Kabelstrang an der Position, an der der Kabelbinder an dem Kabelstrang angeordnet ist, bewegungsfest oder im Wesentlichen bewegungsfest und/oder drehfest zu fixieren und andererseits die Kosten niedrig zu halten.

Es kann vorgesehen sein, dass die Fixierungseinrichtung zur Fixierung der Kupplungsverbindung zwischen dem zumindest einen Kupplungselement und dem zumindest einen Gegenkupplungselement ein Befestigungsmittel, beispielsweise Schraube, aufweist.

In einer zweckmäßigen Ausführungsform der Erfindung kann das Gegenkupplungselement an dem zumindest einen Antriebsmittel angeordnet sein.

Das zumindest eine Antriebsmittel kann sich beispielsweise im Zuge einer Bewegung des Lichtmoduls zur Leuchtweitenregelung gleichermaßen mitbewegen, wobei die oben genannten Erfordernisse zur Zugentlastung der Steckverbindung bzw. des Bereichs des Kabelstrangs, der unmittelbar an den Stecker anschließt, erfüllt sind.

Dabei kann es günstig sein, wenn das Gegenkupplungselement fest bzw. nicht lösbar mit dem Antriebsmittel verbunden ist.

Es kann von Vorteil sein, wenn das zur Verwendung als Gegenkupplungselement vorgesehene Element bereits Bestandteil des zumindest einen Antriebsmittels ist, wobei dadurch Kosten erheblich reduziert werden sowie ein logistischer Aufwand gesenkt werden können.

Erfindungsgemäß ist das Gegenkupplungselement als Blechzunge ausgebildet.

Hiermit ist allerdings keine Beschränkung auf ein bestimmtes Material, sondern vielmehr ein dem zumindest einen Antriebsmittel vorragender Teil gemeint, der dazu geeignet ist als Gegenkupplungselement zu fungieren.

Überdies kann als Gegenkupplungselement jedes Bauteil, welches beispielsweise an dem Antriebsmittel bereits angeordnet ist und ursprünglich für eine andere Funktion vorgesehen war, fungieren.

So kann die Blechzunge des Antriebsmittels anfänglich als elektrische Masse gedient haben oder auch zur Wärmeabfuhr.

Es kann günstig sein, wenn das Kupplungselement als Kabelschuh ausgebildet ist, um an das als Blechzunge ausgebildete Gegenkupplungselement zu koppeln.

Im Allgemeinen ermöglicht ein Kabelschuh ein elektrisches Verbinden von Kabeln oder Litzen durch Schrauben oder Stecken, wobei üblicherweise ein Kabelende in dem Kabelschuh angeordnet und gepresst wird.

Mögliche Ausführungsformen sind Flachstecker-Kabelschuhe, Flachsteckhülsen, Ringform-Kabelschuhe oder Gabelform-Kabelschuhe, wobei Ringform-Kabelschuhe und Gabelform-Kabelschuhe üblicherweise mittels einer Schraube mit ihrem jeweiligen Gegenstück fixiert werden.

Im Handel üblicherweise verwendete Begriffe für diese Art von Steckern sind sogenannte Faston-Anschlüsse, -Buchsen und -Flachstecker, wobei diese mit und ohne Isolierung ausgeführt sein können.

Diese standardisierten Kabelschuhe stellen eine kostengünstige Bauform dar, kommen in verschiedenen Größen vor und ermöglichen ein leichtes Trennen der mechanischen bzw. elektrischen Verbindung zu Servicezwecken.

Erfindungsgemäß ist das Kupplungselement als Flachsteckerhülse ausgebildet.

Es kann vorgesehen sein, dass das zumindest eine Kupplungselement genau ein Halterungsmittel aufweist.

Nachfolgend wird die Erfindung beispielhaft anhand von Zeichnungen näher erläutert.

Hierbei zeigen
Fig. 1 ein beispielhaftes Lichtmodul mit einer Fixierungseinrichtung,
Fig. 2 eine detailliertere Ansicht des Lichtmoduls aus Fig. 1.
Fig. 3 eine Ansicht von seitlich oben von Teilen des Lichtmoduls aus Fig. 1 bzw. 2,
Fig. 4 eine Ansicht des Antriebsmittels mit einem Gegenkupplungselement von oben,
Fig. 5 ein beispielhaftes Kupplungselement mit einem Halterungsmittel,
Fig. 6 eine Detailansicht der Fixierungseinrichtung aus Fig. 1, 2 und 3,und
Fig. 7, 8 und 9 Darstellungen von beispielhaften Kupplungselementen.

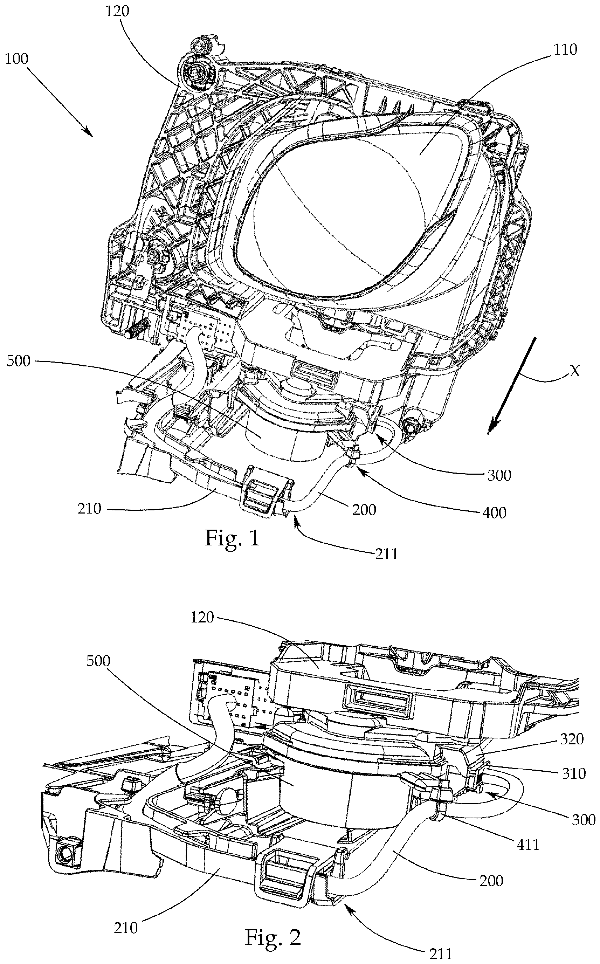

**Fig. 1** zeigt ein beispielhaftes Lichtmodul **100** mit einem Tragrahmen **120,** einer Lichtformungseinheit **110,** welche als Linse ausgeführt ist, ein Antriebsmittel **500,** durch welches das Lichtmodul **100** zumindest teilweise angetrieben wird, und einem zur Ansteuerung und/oder Energieversorgung des Lichtmoduls **100** zu dem Lichtmodul hinführenden Kabelstrang **200,** wobei das Lichtmodul eine Fixierungseinheit **400** aufweist, um den Kabelstrang **200** punktuell bzw. abschnittweise zu fixieren.

Am Ende des Kabelstrangs **200** ist ein Stecker **310** angeordnet, der mittels einer Steckverbindung **300** mit einem Steckergegenstück **320,** das an dem Antriebsmittel **500** angeordnet ist, mit dem Antriebsmittel **500** und dadurch mit dem Lichtmodul **100** verbunden ist, wie in **Fig. 2** gezeigt.

Das Lichtmodul **100** ist dazu eingerichtet, Bewegungen in bzw. gegen eine gewünschte Lichtaustrittsrichtung, welche beispielhaft in den **Fig. 1, 2** und **3** als Pfeil **X** dargestellt ist, zu vollführen, beispielsweise bei einer Leuchtweitenregelung.

Im Zuge einer solchen Bewegung bewegt sich aufgrund der Anordnung der Steckverbindung **300** diese gleichermaßen mit, wodurch der Kabelstrang ebenfalls in Bewegung versetzt wird.

Um Kabelbrüchen oder anderen Nachteilen, die durch eine unkontrollierte Bewegung eines Kabelstrangs entstehen können, entgegenwirken zu können, ist der Kabelstrang **200** zumindest abschnittsweise in einem Kabelkanal **210,** der einen Anfangs- bzw. Endbereich **211** aufweist, verlegt und fixiert. Der Kabelkanal **210** ist gegenüber einer Bewegung des Lichtmoduls in Ruhe und eine Verlegung bzw. Fixierung des Kabelstrangs **200** in dem Kabelkanal **210** kommt einer Fixierung an einem Kraftfahrzeugscheinwerfergehäuse gleich, in dem beispielhafte Lichtmodule **100** verbaut sein können, jedoch nicht in den Figuren eingezeichnet ist.

Bei einer Bewegung des Lichtmoduls **100** in die beispielhafte Lichtaustrittsrichtung **X** ist der in dem Kabelkanal **210** abschnittsweise verlegte bzw. fixierte Kabelstrang **200** in Ruhe, wobei sich ein durch den Anfangs- bzw. Endbereich **211** des Kabelkanals und der Steckverbindung **300** gebildeter Abschnitt des Kabelstrangs **200** bei einer Bewegung des Lichtmoduls **100** weiterhin verbiegen bzw. wölben kann.

Jede Art von Relativbewegungen des Lichtmoduls 100 bezüglich des Kabelkanals 210 versetzt diesen Abschnitt des Kabelstrangs **200** in Bewegung, wodurch auch der Bereich des Kabelstrangs **200** in Bewegung versetzt wird, der unmittelbar an den Stecker **310** anschließt, was zu Zugspannungen in diesem sensiblen Bereich führen kann.

Die Fixierungseinheit **400** umfasst ein Kupplungselement **410** sowie ein Gegenkupplungselement **420,** wobei das Kupplungselement **410** ein Halterungsmittel **411** aufweist, welches dazu eingerichtet ist, den Kabelstrang **200** an der Position, an der das Halterungsmittel **411** an dem Kabelstrang **200** angeordnet ist, bezüglich des Kupplungselements **410** bewegungsfest oder im Wesentlichen bewegungsfest zu halten.

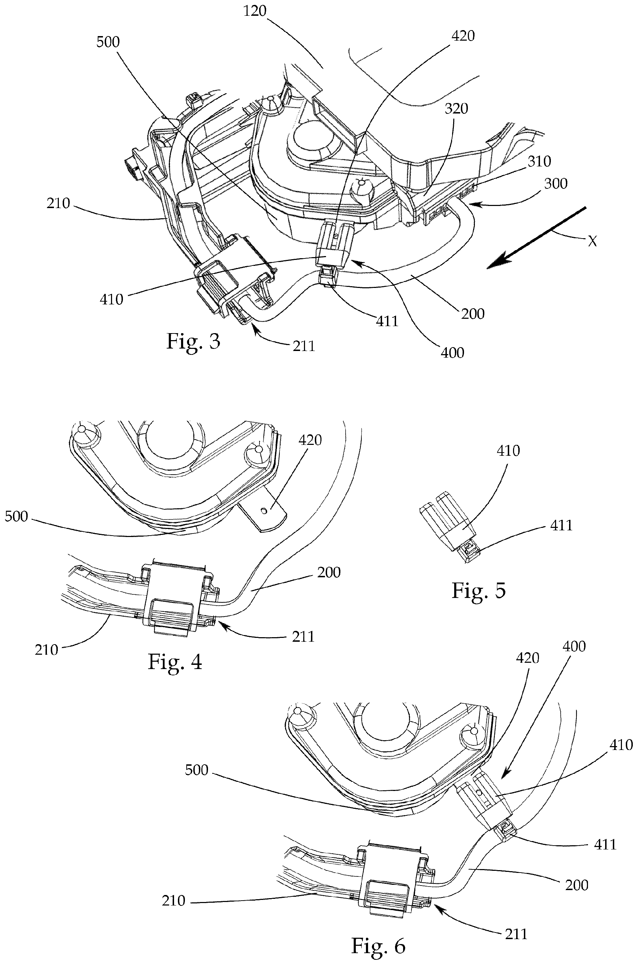

**Fig. 3** zeigt unter anderem eine vergrößerte Ansicht der Fixierungseinrichtung **400,** wobei das Halterungsmittel **411** den Kabelstrang **200** an einer Stelle des Abschnitts, der durch den Anfangs- bzw. Endbereich **211** des Kabelkanals und der Steckverbindung **300** gebildet ist, hält.

Durch die Kopplung des Kupplungselements **410** mit dem Gegenkupplungselement **420,** welches wie in den Figuren ersichtlich an dem Antriebsmittel **500** angeordnet ist, verkürzt sich der zuvor bewegliche Abschnitt des Kabelstrangs **200** zwischen dem Anfangs- bzw. Endbereich **211** des Kabelkanals und der Steckverbindung **300** auf die Länge, die durch den Anfangs- bzw. Endbereich **211** des Kabelkanals und der Position der Fixierungseinrichtung **400** vorgegeben wird, d.h. dass bei einer Bewegung des Lichtmoduls **100** der Bereich des Kabelstrangs **200,** der unmittelbar an den Stecker **310** anschließt, eine Zugentlastung erfährt.

Das Gegenkupplungselement **420** ist als Blechzunge ausgeführt und in dem in den Figuren gezeigten Beispiel als Bestandteil des Antriebsmittels **500** fest mit diesem verbunden, wobei das Kupplungselement **410** als Flachstecker-Kabelschuh ausgebildet ist.

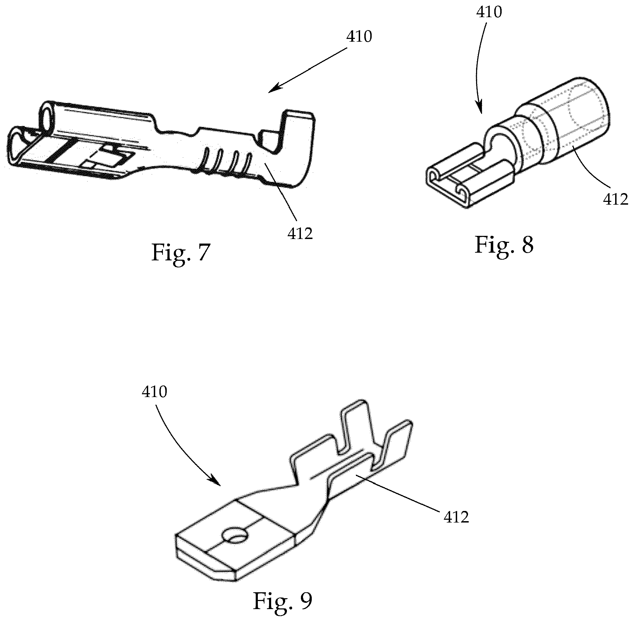

So zeigt **Fig. 7** eine detailliertere Ansicht des Kupplungselements **410,** welches als Flachsteckhülse mit einem üblicherweise für Kabelenden vorgesehenen Press- bzw. Crimpkabelschuh, in dem in der Regel ein Kabelende angeordnet und anschließend mit einer geeigneten Presszange gepresst werden kann - im weiteren Verlauf Kabelbereich **412** genannt - ausgebildet ist.

**Fig. 8** zeigt ein weiteres Beispiel einer Flachsteckhülse **410** mit einem Kabelbereich **412** der mit einer Isolierung ausgestattet ist, wobei der Kabelbereich eine durchgehende Öffnung aufweist, um das Halterungsmittel **411** darin durchzuführen und anzuordnen.

**Fig. 9** zeigt ein weiteres Beispiel eines Kabelschuhs **410,** welches als Flachstecker-Kabelschuh ausgebildet ist.

Sowohl für das Kupplungselement **410** als auch für das Gegenkupplungselement **420** sind andere Alternativen als die in den Figuren gezeigten Beispiele möglich.

So kann vorgesehen sein, dass der Kabelbereich **412** im Gegensatz zu den in den Figuren gezeigten Beispielen nicht als Verlängerung der Flachsteckhülse bzw. Flachstecker-Kabelschuh in der jeweiligen Steckrichtung angeordnet ist, sondern beispielsweise in einem 90 Grad Winkel dazu.

Da die Kabelstrangummantelung in der Regel gegenüber Zug- und/oder Druckspannung nicht übermäßig empfindlich ist, ist das Halterungsmittel **411** in dem gezeigten Ausführungsbeispiel als Kabelbinder ausgeführt, wie in **Fig. 1, 2****,** **3, 5** und **6** dargestellt.

Der Kabelbinder **411** wird hierzu in dem Press- bzw. Crimpkabelschuhs der Flachsteckhülse **410** angeordnet, d.h. in dem Kabelbereich **412** der Flachsteckhülse, wobei der Press- bzw. Crimpkabelschuh anschließend gepresst wird, sodass der sich darin befindende Kabelbinder umschlossen ist.

Zur Fixierung der mechanischen Verbindung zwischen dem Kupplungselement **410** und dem Gegenkupplungselement **420,** welche lösbar ausgeführt sein kann, kann ein Befestigungsmittel, beispielsweise Schraube, vorgesehen sein.

Weitere mögliche Ausführungsformen können auch mehr als eine Fixierungseinrichtung **400** mit je zwei oder mehr Halterungsmitteln **411** je Kupplungselement **410** aufweisen.

### LISTE DER BEZUGSZEICHEN

- 100: Lichtmodul
- 110: Lichtformungseinheit (Linse)
- 120: Tragerahmen
- 200: Kabelstrang
- 210: Kabelkanal
- 211: Anfangs- bzw. Endbereich d. Kabelkanals
- 300: Steckverbindung
- 310: Stecker
- 320: Steckergegenstück
- 400: Fixierungseinrichtung
- 410: Kupplungselement
- 411: Halterungsmittel
- 412: Kabelbereich
- 420: Gegenkupplungselement
- 500: Antriebsmittel
- X: Lichtaustrittsrichtung

## Patentansprüche

1. Lichtmodul (100) für einen Kraftfahrzeugscheinwerfer, wobei das Lichtmodul (100) zumindest eine Lichtquelle, zumindest eine Lichtformungseinheit (110), zumindest ein Antriebsmittel (500), durch welches das Lichtmodul (100) verstellbar ist, und einen zur Ansteuerung und/ oder Energieversorgung des Lichtmoduls zu dem Lichtmodul (100) hinführenden Kabelstrang (200) umfasst, der mittels einer Steckverbindung (300) mit dem Lichtmodul (100) verbunden ist, wobei die Steckverbindung (300) einen Stecker (310) und ein Steckergegenstück (320) aufweist,
wobei das Lichtmodul (100) zumindest eine Fixierungseinrichtung (400) für den Kabelstrang (200) aufweist, um diesen Kabelstrang (200) punktuell und/ oder abschnittsweise zu fixieren, wobei die Fixierungseinrichtung (400) zumindest ein Kupplungselement (410) sowie zumindest ein an dem Lichtmodul (100) angeordnetes Gegenkupplungselement (420) umfasst, wobei das zumindest eine Kupplungselement (410) zumindest ein Halterungsmittel (411) für den Kabelstrang (200) aufweist, welches dazu eingerichtet ist, den Kabelstrang (200) an der Position, an der das zumindest eine Halterungsmittel (411) an dem Kabelstrang (200) angeordnet ist, bezüglich des zumindest einen Kupplungselements (410) zu fixieren,
**dadurch gekennzeichnet, dass**
das Gegenkupplungselement (420) als Blechzunge ausgebildet ist und das Kupplungselement (410) als Flachsteckerhülse ausgebildet ist, um an das als Blechzunge ausgebildete Gegenkupplungselement (420) zu koppeln.

2. Lichtmodul nach Anspruch 1, **dadurch gekennzeichnet, dass** die Verbindung zwischen dem zumindest einen Kupplungselement (410) und dem zumindest einen Gegenkupplungselement (420) lösbar ist.

3. Lichtmodul nach Anspruch 1 oder 2, **dadurch gekennzeichnet, dass** das zumindest eine Halterungsmittel (411) als Kabelbinder ausgebildet ist.

4. Lichtmodul nach einem der Ansprüche 1 bis 3, **dadurch gekennzeichnet, dass** die Fixierungseinrichtung (400) zur Fixierung der Verbindung zwischen dem zumindest einen Kupplungselement (410) und dem zumindest einen Gegenkupplungselement (420) ein Befestigungsmittel, beispielsweise Schraube, aufweist.

5. Lichtmodul nach einem der Ansprüche 1 bis 4, **dadurch gekennzeichnet, dass** das Gegenkupplungselement (420) an dem zumindest einen Antriebsmittel (500) angeordnet ist.

6. Lichtmodul nach Anspruch 5, **dadurch gekennzeichnet, dass** das Gegenkupplungselement (420) fest bzw. nicht lösbar mit dem Antriebsmittel (500) verbunden ist.

7. Lichtmodul nach Anspruch 1 bis 6, **dadurch gekennzeichnet, dass** das zumindest eine Kupplungselement (410) genau ein Halterungsmittel (411) aufweist.

8. Kraftfahrzeugscheinwerfer umfassend zumindest ein Lichtmodul nach einem der Ansprüche 1 bis 7.

## Claims

1. A light module (100) for a motor vehicle headlight, wherein the light module (100) comprises a light source, at least one light forming unit (110), at least one drive means (500) by means of which the light module (100) can be adjusted, and a cable harness (200) leading to the light module (100) for controlling and/or supplying the light module with energy, the cable harness (200) being connected with the light module (100) by means of a plug connection (300), wherein the plug connection (300) has a plug (310) and a plug counterpart (320),
wherein the light module (100) has at least one fixation mechanism (400) for the cable harness (200) in order to fix this cable harness (200) at points and/or in sections,
wherein the fixation mechanism (400) comprises at least one coupling element (410) as well as at least one counterpart coupling element (420) arranged on the light module (100),
wherein the at least one coupling element (410) has at least one mounting means (411) for the cable harness (200) that is adapted to fix the cable harness (200), in relation to the at least one coupling element (410), at the position at which the at least one mounting means (411) is arranged on the cable harness (200),
**characterized in that**
the counterpart coupling element (420) is configured as a tongue of sheet metal and the coupling element (410) is configured as a flat connector sleeve for coupling to the counterpart coupling element (420) configured as a tongue of sheet metal.

2. The light module according to claim 1, **characterized in that** the connection between the at least one coupling element (410) and the at least one counterpart coupling element (420) is releasable.

3. The light module according to claim 1 or 2, **characterized in that** the at least one mounting means (411) is configured as a cable tie.

4. The light module according to one of claims 1 to 3, **characterized in that** the fixation mechanism (400) has an attachment means, for example a screw, between the at least one coupling element (410) and the at least one counterpart coupling element (420) for the fixation of the connection.

5. The light module according to claims 1 to 4, **characterized in that** the counterpart coupling element (420) is arranged on the at least one drive means (500).

6. The light module according to claim 5, **characterized in that** the counterpart coupling element (420) is connected with the drive means (500) in a fixed, i.e. non-releasable manner.

7. The light module according to claims 1 to 6, **characterized in that** the at least one coupling element (410) has exactly one mounting means (411).

8. A motor vehicle headlight comprising at least one light module according to one of claims 1 to 7.

## Revendications

1. Module d'éclairage (100) pour un phare de véhicule automobile, sachant que le module d'éclairage (100) comprend au moins une source d'éclairage, au moins une unité de formation de lumière (110), au moins un moyen d'entraînement (500) par lequel le module d'éclairage (100) peut être réglé et un faisceau de câbles (200) pour la commande et/ou l'alimentation en énergie du module d'éclairage aboutissant au module d'éclairage (100), qui est relié au moyen d'une connexion (300) au module d'éclairage (100), sachant que le connexion (300) comporte un connecteur (310) et un connecteur complémentaire (320),
sachant que le module d'éclairage (100) comporte au moins un dispositif de fixation (400) pour le faisceau de câbles (200) pour fixer ponctuellement et/ou par sections ce faisceau de câbles (200),
sachant que le dispositif de fixation (400) comprend au moins un élément d'accouplement (410) ainsi qu'au moins un élément d'accouplement complémentaire (420) disposé sur le module d'éclairage (100),
sachant qu'au moins un élément d'accouplement (410) comporte au moins un moyen de fixation (411) pour le faisceau de câbles (200), lequel est agencé pour fixer le faisceau de câbles (200) à la position à laquelle au moins un moyen de fixation (411) est disposé sur le faisceau de câbles (200), par rapport à au moins un élément d'accouplement (410),
**caractérisé en ce que**
l'élément d'accouplement complémentaire (420) est constitué comme une languette de tôle et l'élément d'accouplement (410) est constitué comme une douille de connexion plate pour accoupler à l'élément d'accouplement complémentaire (420) constitué comme une languette de tôle.

2. Module d'éclairage selon la revendication 1, **caractérisé en ce que** la liaison entre au moins un élément d'accouplement (410) et au moins un élément de coupage complémentaire (420) est amovible.

3. Module d'éclairage selon la revendication 1 ou 2, **caractérisé en ce qu'**au moins un moyen de fixation (411) est configuré comme un attache-câble.

4. Module d'éclairage selon l'une quelconque des revendications 1 à 3, **caractérisé en ce que** le dispositif de fixation (400) pour la fixation de la liaison entre au moins un élément d'accouplement (410) et au moins un élément d'accouplement complémentaire (420) comporte un moyen de fixation, par exemple une vis.

5. Module d'éclairage selon l'une quelconque des revendications 1 à 4, **caractérisé en ce que** l'élément d'accouplement complémentaire (420) est disposé sur au moins un élément d'entraînement (500).

6. Module d'éclairage selon la revendication 5, **caractérisé en ce que** l'élément d'accouplement complémentaire (420) est relié fermement ou de façon non amovible au moyen d'entraînement (500).

7. Module d'éclairage selon les revendications 1 à 6, **caractérisé en ce qu'**au moins un élément d'accouplement (410) comporte exactement un moyen de fixation (411).

8. Phare de véhicule automobile comprenant au moins un module d'éclairage selon l'une quelconque des revendications 1 à 7.
